# EUROPEAN PATENT SPECIFICATION

(11) **EP 1 235 013 B1**
(45) Date of publication and mention of the grant of the patent: **28.03.2007**
(21) Application number: 02003227.2
(22) Date of filing: 20.02.2002
(51) Int. Cl.: F16K 17/04

(54) **Safety valve, particularly for oil-filled electric transformers**
Sicherheitsventil, insbesondere für ölgefüllte, elektrische Transformatoren
Soupape de sécurité, en particulier pour les transformateurs électriques remplis d'huile

(30) Priority: 27.02.2001 IT PD010014 U
(43) Date of publication of application: 28.08.2002
(73) Proprietor: COMEM S.p.A., 36054 Montebello Vicentino (Vicenza) (IT)
(72) Inventor: Dal Lago, Silvio, 36100 Vicenza (IT)
(74) Representative: De Gregori, Antonella

(56) References cited:
- US-A- 3 217 082
- US-A- 4 431 023
- US-A- 4 676 266
- US-A- 4 843 187

## Description

The present invention relates to a safety valve, particularly for oil-filled electric transformers.

It is known that large electric transformers, due to problems linked to dissipation of the heat generated inside them, are accommodated in vessels and immersed therein in a bath of mineral oil, which constitutes a coolant fluid.

For safety reasons, the oil inside the vessel must also not exceed a preset pressure threshold.

For this purpose, safety valves are fitted to the vessels and are designed to vent externally any overpressure that might occur in the vessels.

A safety valve according to the preamble of claim 1 is known from US-A-4,676,266. Safety valves of the known type are made according to the preamble of claim 1.

Initially, the second gasket does not form a seal on the annular edge.

By adjusting the preloading of the spring, the value of the pressure required to open the valve is determined.

As the internal pressure rises, the cover tends to perform an outwardly axial translational motion, but the lip-type gasket, thanks to its flexibility, continues to touch said cover, keeping the outward passage closed, until a given threshold is reached.

When the pressure threshold value is reached, the lip-type gasket separates from the cover and the pressure acts instantaneously on a larger surface (the entire internal area of the cover), on the closure seal of which the second gasket acts.

The increase in force is sudden, and therefore the cover is made to perform a further translational motion and move, with its edge, beyond the toroidal gasket; accordingly, pressure is vented externally and the initial conditions are then restored immediately.

Although safety valves of the known type have been used and commercially available for many years, they are not devoid of drawbacks.

In fact they have a structure that allows the seepage of oil at a pressure below the nominal set value.

Furthermore, restoring of the seal at the nominal value is particularly slow.

The aim of the present invention is to provide a safety valve particularly for oil-filled electric transformers that solves, or reduces substantially, the above noted drawbacks of conventional safety valves.

Within this aim, an object of the present invention is to provide a valve that minimizes the seepage of fluid before bursting.

Another object of the present invention is to provide a safety valve that allows precise setting.

Another object of the invention is to provide a safety valve that ensures precise and repetitive nominal bursting values.

Another object of the invention is to provide a safety valve that is capable of rapidly restoring, during closure, the seal at the nominal value.

This aim and these and other objects that will become better apparent hereinafter are achieved by a safety valve particularly for oil-filled electric transformers, with the characterizing features of claim 1.

Further characteristics and advantages of the invention will become better apparent from the description of a preferred but not exclusive embodiment thereof, illustrated only by way of non-limitative example in the accompanying drawings, wherein:

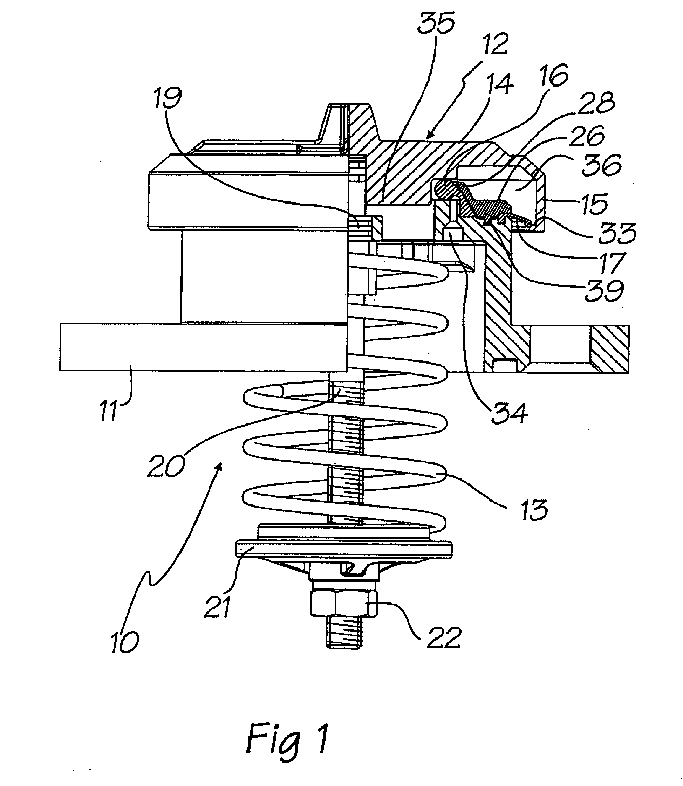

Figure 1 is a sectional view, taken along a transverse plane, of a valve according to the invention;

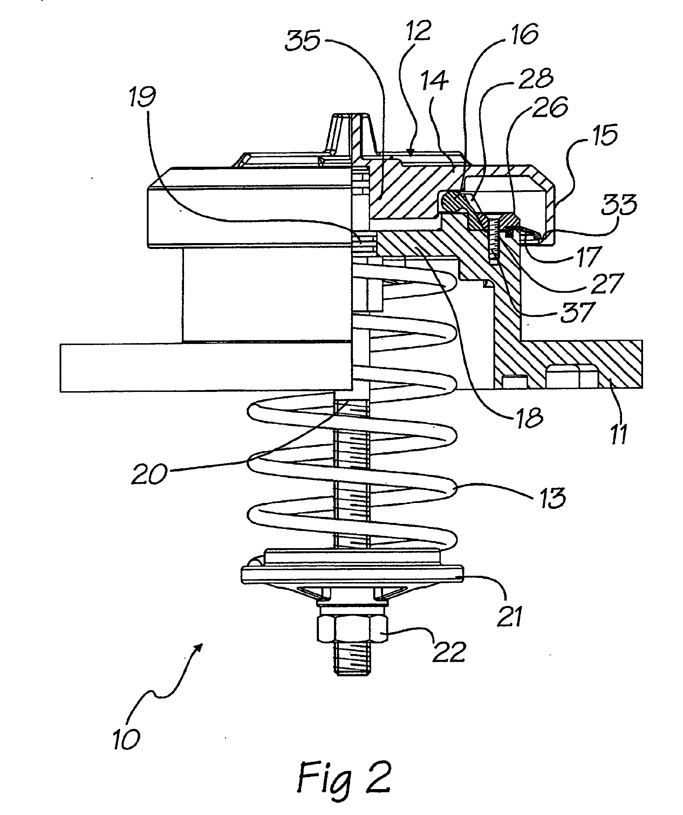

Figure 2 is a sectional view, taken along a different transverse plane, of the valve of Figure 1;

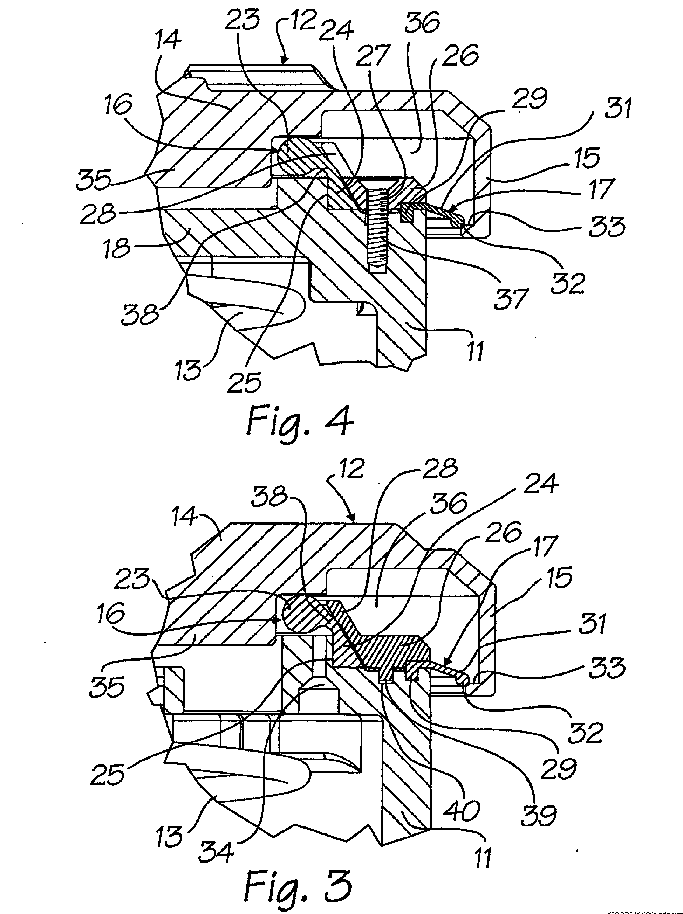

Figure 3 is a view of a detail of Figure 1;
Figure 4 is a view of a detail of Figure 2.

With reference to the figures, a safety valve particularly for oil-filled electric transformers is generally designated by the reference numeral 10.

The valve 10 comprises a cylindrical flanged metallic union 11, to be fixed hermetically, by means of bolts which are not shown, at an appropriately provided open region of a vessel of an oil-filled electric transformer, which is also not shown in the figure for the sake of simplicity but is in any case known per se.

A cover 12 is arranged so as to close the union 11 in combination with a helical spring 13, as described in greater detail hereinafter, and is constituted by a disk-like portion 14 from which an annular portion 15 protrudes perimetrically.

A first gasket 16 is arranged between the union 11 and the disk-like portion 14 of the cover 12.

A second gasket 17 acts instead externally with respect to the first one, between the union 11 and the annular portion 15 of the cover 12, and is arranged so as to surround said union 11.

Initially, the second gasket 17 does not form a seal on the annular portion 15.

The union 11 is internally provided with spokes 18, which are monolithic with an axial bush 19 that retains and guides a pin 20, which is fixed axially, with one end, to the inner part of the cover 12.

The pin 20 is threaded in a downward region and supports a plate 21, whose axial position is adjustable by means of a nut 22.

The helical spring 13 is arranged on the pin 20 in a compressed condition between the spokes 18 and the plate 21, causing the closure of the cover 12; in practice, the pin 20 acts as a tension element.

The degree to which the nut 22 is screwed onto the pin 20 determines the preloading of the spring 13 and therefore the setting of the opening of the cover 12.

As regards the gaskets, the first gasket 16 has a toroidal portion 23, which provides the seal between the union 11 and the cover 12, and from which a contoured portion 24 and an annular element 26 protrude along the outer perimeter and toward said union 11 so as to form a substantially conical outer wall, said contoured portion 24 having a trapezoidal cross-section and being enclosed in a complementarily shaped seat formed between the edge 25 of the union 11, and said annular element 26, being fixed thereon by means of screws 37 which engage corresponding holes 27.

The toroidal portion 23 and the trapezoidal portion 24 are connected by a narrower portion 38, which is elastically deformable and allows movements for the toroidal portion 23.

Below the toroidal portion 23 and the narrower portion 38 of the first gasket 16 axial through holes 34 are provided which are angularly equidistant and allow the passage of the pressurized oil contained within the transformer to which the valve 10 is applied.

The annular element 26 is provided with an internal portion 28 which has a conical elongation toward the cover 12, which, as described in greater detail hereinafter, is meant to guide the movements of the toroidal portion 23 of the first gasket 16.

Furthermore, the annular element 26 is provided, in a downward region, with abutment protrusions 39, which engage corresponding slots 40 for its positioning on the union 11.

The second gasket 17 is instead provided with an internal portion 29, which in this case has a square cross-section, which is enclosed in a complementarily shaped seat formed between an annular slot 30 of the union 11 and the outer portion of the annular element 26.

A lip 31 protrudes in a substantially radial direction from the portion 29 having a square cross-section and ends with an enlarged lip edge 32, which has a toroidal shape and arranges itself proximate to the annular portion 15 of the cover 12.

Said cover is shaped internally, in a downward region, so as to form an undercut 33.

In practice, the edge 32 of the lip 31 arranges itself so as to rest on the undercut 33 when the cover 12 starts to rise, producing the seal.

Finally, the cover 12 is provided with a cylindrical portion 35, which protrudes axially from the disk-like portion 14 and whose diameter is smaller than the inside diameter of the first gasket 16 and whose axial dimension is such that when the cover 12 returns to the closed position, when it is already within the space occupied by the first gasket 16, the enlarged edge 32 of the second gasket 17 has yet to arrange itself in the undercut 33.

As regards operation, as the internal pressure of the vessel of the oil-filled electric transformer to which the valve 10 is applied increases, the cover 12 performs an axial translational motion which is contrasted by the spring 13, while the edge 32 of the second gasket 17 is engaged with the undercut 33.

The toroidal portion 23 of the first gasket 16 begins to rise, as a consequence of the elastic deformation of the narrower portion 38, due to the pressure of the oil, owing to the presence of the holes 34, and is kept guided by the conical portion 28 of the annular element 26, maintaining the seal for a certain stroke of the cover 12.

Owing to the pressure, the cover 12 continues to rise until the first gasket 16 no longer forms a seal and oil begins to seep toward the annular chamber 36 formed between the union 11 and the cover 12, while the second gasket 17 still provides a seal.

Once the nominal set value has been reached, the cover 12 disengages the second gasket 17 and bursting occurs, with escape of the oil.

At the end of the overpressure, the cover 12 starts to return to the inactive position as a consequence of the return action of the spring 13.

The second gasket 17 remains open and the oil that is present in the annular chamber 36 continues to be discharged at the instant in which the cylindrical portion 35 of the cover 12, by entering the space occupied by the first gasket 16, closes the loss of oil from the inside of the valve 10.

In this manner, closure is quicker and safer.

In practice it has been found that the intended aim and objects of the present invention have been achieved.

The valve is in fact particularly reliable and precise in terms of set value for the nominal bursting value.

Seepage before bursting is reduced considerably, and thanks to the axial cylindrical portion of the cover the seal is restored rapidly during closure.

The technical details may be replaced with other technically equivalent elements, all of which being considered to fall within the scope of the appended claims.

In practice, the materials employed, so long as they are compatible with the contingent use, as well as the dimensions, may be any according to requirements.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A safety valve particularly for oil-filled electric transformers, of the type comprising a flanged union (11) to be fixed hermetically at a suitable open region of the vessel of an oil-filled electric transformer, and a cover (12) associated with elastic means (13) which apply an adjustable axial thrust and is arranged so as to close said union (11), the valve (10) comprising:
-- a first gasket (16) with a substantially toroidal internal portion (23), which acts between said union (11) and the disk-like portion (14) of said cover (12),
- a second gasket (17), which acts externally with respect to the first gasket (16) between said union (11) and the annular portion (15) of said cover (12), with a contoured internal portion (29), which is enclosed in a complementarily shaped seat (30,26), from which a lip (31) protrudes in a substantially radial direction and ends with an enlarged edge (32), which is arranged normally so as to rest on an undercut (33) formed by the lower portion of the annular element (15) of said cover (12), **characterized in that** an elastically deformable narrower portion (38) and a contoured portion (24) extend perimetrically in succession from said toroidal portion (23) toward said union (11), said contoured portion (24) being enclosed in a corresponding seat (25,26), angularly equidistant axial holes (34) for the passage of pressurized oil being provided below said toroidal portion (23) and said narrower portion (38).

2. The valve according to claim 1, **characterized in that** said contoured portion (24) of said first gasket (16) has a substantially trapezoidal cross-section enclosed in a complementarily shaped seat formed by said union (11,25) and an annular element (26) that is fixed thereon, the outer wall of said first gasket (16) being substantially conical.

3. The valve according to the preceding claims, **characterized in that** said contoured portion (29) of said second gasket has a square shape and is enclosed in a complementarily shaped seat formed between an annular slot (30) of said union (11) and the outer portion of said annular element (26).

4. The valve according to the preceding claims, **characterized in that** said annular element (26) has an internal portion (28) that protrudes with a substantially conical shape toward said cover (12) and is arranged adjacent to the substantially conical outer part of said first gasket (16).

5. The valve according to one or more of the preceding claims, **characterized in that** said annular element (26) is provided, in a downward region, with abutment protrusions (39) for positioning thereof.

6. The valve according to one or more of the preceding claims, **characterized in that** a cylindrical portion (35) protrudes axially from said disk-like portion (14) of said cover (12), said cylindrical portion (35) having an outside diameter that is smaller than the inside diameter of said first gasket (16) and an axial dimension such that, upon return of said cover (12) to the closed condition, when it is already within the space occupied by said first gasket (16), the enlarged edge (32) of said second gasket (17) has yet to arrange itself on said undercut (33) of the cover (12).

## Patentansprüche

1. Sicherheitsventil, insbesondere für ölgefüllte elektrische Transformatoren von dem Typ mit einer Anflanscheinheit (11), die hermetisch an einem geeigneten offenen Bereich des Gefäßes eines ölgefüllten elektrischen Transformators zu befestigen ist, und einer Abdeckung (12), der elasische Mittel (13) zugeordnet sind, die einen einstellbaren axialen Druck aufbringen, und die eingerichtet ist, um die Einheit (11) zu verschließen, wobei das Ventil (10) umfasst:
- eine erste Dichtung (16) mit einem im Wesentlichen torischen inneren Abschnitt (23), die zwischen der Einheit (11) und dem scheibenartigen Abschnitt (14) der Abdeckung (12) wirkt,
- eine zweite Dichtung (17), die außen in Bezug auf die erste Dichtung (16) zwischen der Einheit (11) und dem ringförmigen Abschnitt (15) der Abdeckung (12) wirkt, mit einem konturierten inneren Abschnitt (29), der in einem komplementär geformten Sitz (30, 26) eingeschlossen ist, von welchem eine Lippe (31) in einer im Wesentlichen radialen Richtung vorsteht und mit einem erweiterten Rand (32) endet, der normal derart angeordnet ist, dass er auf einem Unterschnitt (33) aufliegt, der durch den unteren Abschnitt des ringförmigen Elements (15) der Abdeckung (12) gebildet ist,
**dadurch gekennzeichnet, dass**
ein elastisch verformbarer schmalerer Abschnitt (38) und ein konturierter Abschnitt (24) sich umfänglich von dem torischen Abschnitt (23) aufeinander folgend in Richtung der Einheit (11) erstrecken, wobei der konturierte Abschnitt (24) in einem entsprechenden Sitz (25, 26) eingeschlossen ist, wobei winklig gleich beabstandete axiale Löcher (34) für den Durchtritt von Drucköl unterhalb des torischen Abschnitts (23) und des schmaleren Abschnitts (38) vorgesehen sind.

2. Ventil nach Anspruch 1, **dadurch gekennzeichnet, dass** der konturierte Abschnitt (24) der ersten Dichtung (16) einen im Wesentlichen trapezförmigen Querschnitt aufweist, der in einem komplementär geformten Sitz eingeschlossen ist, der durch die Einheit (11, 25) und ein ringförmiges Element (26), das an dieser befestigt ist, gebildet ist, wobei die Außenwand der ersten Dichtung (16) im Wesentlichen konisch ist.

3. Ventil nach den vorhergehenden Ansprüchen, **dadurch gekennzeichnet, dass** der konturierte Abschnitt (29) der zweiten Dichtung eine quadratische Form aufweist und in einem komplementär geformten Sitz eingeschlossen ist, der zwischen einem ringförmigen Schlitz (30) der Einheit (11) und dem äußeren Abschnitt des ringförmigen Elements (26) gebildet ist.

4. Ventil nach den vorhergehenden Ansprüchen, **dadurch gekennzeichnet, dass** das ringförmige Element (26) einen inneren Abschnitt (28) aufweist, der mit einer im Wesentlichen konischen Form in Richtung der Abdeckung (12) vorsteht und benachbart zu dem im Wesentlichen konischen äußeren Abschnitt der ersten Dichtung (16) angeordnet ist.

5. Ventil nach einem oder mehreren der vorhergehenden Ansprüche, **dadurch gekennzeichnet, dass** das ringförmige Element (26) in einem unteren Bereich mit Anschlagvorsprüngen (39) zu dessen Positionierung versehen ist.

6. Ventil nach einem oder mehreren der vorhergehenden Ansprüche, **dadurch gekennzeichnet, dass** ein zylindrischer Abschnitt (35) axial von dem scheibenartigen Abschnitt (14) der Abdeckung (12) vorsteht, wobei der zylindrische Abschnitt (35) einen Außendurchmesser, der kleiner ist als der Innendurchmesser der ersten Dichtung (16), und eine axiale Abmessung aufweist, so dass bei Rückführung der Abdeckung (12) in den geschlossenen Zustand, wenn sie sich bereits in dem Raum befindet, der von der ersten Dichtung (16) eingenommen wird, der erweiterte Rand (32) der zweiten Dichtung (17) sich noch selbst auf dem Unterschnitt (33) der Abdeckung (12) anordnen muss.

## Revendications

1. Soupape de sécurité en particulier pour des transformateurs électriques remplis d'huile, du type comprenant une union à bride (11) devant être fixée hermétiquement au niveau d'une région ouverte appropriée de la cuve d'un transformateur électrique rempli d'huile, et un couvercle (12) associé à un moyen élastique (13) qui applique une poussée axiale ajustable et est agencé de façon à fermer ladite union (11), la soupape (10) comprenant :
- un premier joint statique (16) ayant une portion interne sensiblement toroïdale (23), qui agit entre ladite union (11) et la portion de type disque (14) dudit couvercle (12),
- un second joint statique (17), qui agit de manière externe par rapport au premier joint statique (16) entre ladite union (11) et la portion annulaire (15) dudit couvercle (12), ayant une portion interne profilée (29), qui est enfermée dans un siège de forme complémentaire (30, 26), à partir duquel une lèvre (31) dépasse dans une direction sensiblement radiale et se termine avec un bord agrandi (32), qui est agencé normalement de façon à reposer sur une soucoupe (33) formée par la portion inférieure de l'élément annulaire (15) dudit couvercle (12), **caractérisée en ce qu'**une portion plus étroite élastiquement déformable (38) et une portion profilée (24) s'étendent sur le périmètre en succession de ladite portion toroïdale (23) vers ladite union (11), ladite portion profilée (24) étant enfermée dans un siège correspondant (25, 26), des trous axiaux angulairement équidistants (34) pour le passage d'huile sous pression étant disposés en dessous de ladite portion toroïdale (23) et de ladite portion plus étroite (38).

2. Soupape selon la revendication 1, **caractérisée en ce que** ladite portion profilée (24) dudit premier joint statique (16) a une coupe transversale sensiblement trapézoïdale enfermée dans un siège de forme complémentaire formé par ladite union (11, 25) et un élément annulaire (26) qui est fixé dessus, la paroi externe dudit premier joint statique (16) étant sensiblement conique.

3. Soupape selon les revendications précédentes, **caractérisée en ce que** ladite portion profilée (29) dudit second joint statique a une forme carrée et est enfermée dans un siège de forme complémentaire formé entre une fente annulaire (30) de ladite union (11) et la portion externe dudit élément annulaire (26).

4. Soupape selon les revendications précédentes, **caractérisée en ce que** ledit élément annulaire (26) a une portion interne (28) qui dépasse avec une forme sensiblement conique vers ledit couvercle (12) et est agencé adjacent à la partie externe sensiblement conique dudit premier joint statique (16).

5. Soupape selon une ou plusieurs des revendications précédentes, **caractérisée en ce que** ledit élément annulaire (26) est doté, dans une région vers le bas, de protubérances de butée (39) destinées à son positionnement.

6. Soupape selon une ou plusieurs des revendications précédentes, **caractérisée en ce qu'**une portion cylindrique (35) dépasse axialement de ladite portion de type disque (14) dudit couvercle (12), ladite portion cylindrique (35) ayant un diamètre extérieur qui est plus petit que le diamètre intérieur dudit premier joint statique (16) et une dimension axiale telle que, lors du retour dudit couvercle (12) vers la condition fermée, quand il est déjà dans l'espace occupé par ledit premier joint statique (16), le bord agrandi (32) dudit second joint statique (17) doit cependant s'arranger lui-même sur ladite soucoupe (33) du couvercle (12).
